# EUROPEAN PATENT SPECIFICATION

(11) **EP 1 040 660 B1**
(45) Date of publication and mention of the grant of the patent: **07.05.2003**
(21) Application number: 98960967.2
(22) Date of filing: 22.12.1998
(51) Int. Cl.: H04N 7/088, H04N 7/16

(54) **CENSORING DEVICE TO CENSOR CLOSED CAPTIONING OF VIDEO SIGNAL**
ZENSURVORRICHTUNG ZUM ZENSIEREN VON VIDEOSIGNALUNTERTITELN
DISPOSITIF DE CENSURE POUR SOUS-TITRAGE CODE DE SIGNAL VIDEO

(30) Priority: 23.12.1997 US 997531
(43) Date of publication of application: 04.10.2000
(73) Proprietor: Caption TV Inc., Calgary, Alberta T1Y 5M1 (CA)
(72) Inventor: LAPIERRE, Diane, Calgary, Alberta T1Y 5M1 (CA)
(74) Representative: Cardwell, Stuart Martin
(86) International application number: PCT/CA98/01155
(87) International publication number: WO 99/034598

(56) References cited:
- EP-A- 0 648 054
- WO-A-96/13935
- WO-A-97/40446

## Description

### TECHNICAL FIELD

The present invention relates to censoring devices and in particular to a censoring device and method for censoring closed captioning within a video signal. The present invention also relates to a censoring device and method for censoring the audio component of a video signal generally corresponding at least to offensive text in closed captioning embedded within the video signal.

### BACKGROUND ART

It is a common desire of many television viewers to censor portions of broadcast, cable and videocassette programs due to offensive language contained therein. In many instances, the programs include a closed caption component embedded within the video signals so that text, corresponding to the audio component of the video signals, is presented on the television screen. Closed captioned text typically remains displayed on the television screen for several seconds, and therefore, when offensive language forms part of the video signal, the closed captioned offensive text is frequently more glaring and objectionable than the corresponding audio.

Many different solutions have been considered to censor video signals. For example, U.S. Patent Nos. 5,481,296 and 5,561,457 to Cragun et al. disclose a television presentation and editing system which monitors closed caption text to locate items of interest. The system includes a closed caption decoder, which extracts a closed caption signal from an incoming television signal. A digital processor executing a control program scans the closed caption data for words or phrases matching search parameters. Segments of the television signal corresponding to the closed caption data matching the search parameters can be displayed, edited or saved. The television presentation and editing system can also be used to remove offensive language from a television program after it has been recorded.

U.S. Patent No. 4,605,964 to Chard discloses a method and apparatus for editing the output of a television set. Prior to transmission of television signals, teletex coding is inserted into the television signals for identifying "undesirable events". The apparatus includes a decoder, which identifies the teletex coding in received television signals to determine the grade of the following sound and vision
events. If the grade of sound and vision events is above a selected grade, the apparatus deletes or scrambles the audio and visual portions of the received television signals.

US Patent No. 4,554,584 to Elam et al discloses a video and audio blanking system for detecting and decoding rating codes transmitted as part of television signals. When the rating codes in the television signals exceed the rating code of the system as determined by a set of selector switches, the audio and video portions of the television signals are blanked.

US Patent No. 5,583,576 to Perlman et al discloses a rating dependent parental lockout system. The system monitors television signals to detect rating codes transmitted therewith. If a channel is selected and the rating code in the transmitted television signals is above the user selected rating code, the television channel is blocked.

US Patent No. 5,387,942 to Lemelson discloses a system for controlling reception of video signals. The system monitors digital program codes transmitted with video signals and compares the program codes with stored program codes identifying the types of programs to be blocked from reception.

US Patent No. 4,888,796 to Olivo, Jr. discloses a program material screening device, which identifies material content signals co-transmitted with television signals. The device disables the television receiver when the television signals include content signals having a rating above that selected by the user.

US Patent No. 5,751,335 to Shintani discloses a viewing restricting apparatus which monitors incoming television signals to determine rating and length codes transmitted with the television signals. If the rating code of a television program is greater than the rating code selected by the user, a muting circuit mutes the television program until it ends as determined by the length code.

Although the above-identified references disclose devices to censor video signals, most of. these prior art devices censor entire programs based on rating codes transmitted with the program video signals. Often, it is only desired to censor certain language from a program being watched on television in real time.

European Patent Document No. 0,648,054 ("D1") discloses a television presentation and editing system to monitor closed caption text to locate items of interest. The system includes a closed caption decoder which extracts a closed caption signal from an incoming television signal. A digital processor executing a control program scans the closed caption data for words or phrases matching the search parameters. Segments of the television signal corresponding to the closed caption data matching the search for parameters can then either be displayed, editing or saved. The decoding is for the purpose of isolating the closed caption component to facilitate the search and retrieval of associated video programs.

It is therefore an object of the present invention to provide a novel censoring device and method for censoring closed captioning within a video signal.

### DISCLOSURE OF THE INVENTION

According to one aspect of the present invention there is provided a censoring device to censor closed captioning forming part of a video signal comprising:
a decoder receiving an incoming video signal including closed captioning and separating said closed captioning from said video signal;
a closed caption censor receiving the separated closed captioning from said decoder and censoring the same to form censored closed captioning; and
a generator receiving said video signal and the censored closed captioning and combining said censored closed captioning and said video signal to form a censored video signal.

Preferably, the closed caption censor inhibits portions of the separated closed captioning considered objectionable from being visibly discerned when the video signal is conveyed to a television set or the like and presented. In one embodiment, the closed caption censor removes portions of the separated closed captioning considered objectionable. This is achieved either by deleting objectionable text of the. separated closed captioning or replacing objectionable text of the separated closed captioning with substitute text. In another embodiment, the closed caption censor alters control characters within the separated closed captioning that are associated with objectionable text.

Preferably, the closed caption censor includes memory storing objectionable text The closed caption censor compares text of the separated closed captioning with the objectionable text to determine the portions of the separated closed captioning to be inhibited. The memory is preferably programmable to allow the objectionable text to be altered. It is also preferred that the closed caption censor includes at least one data port to allow objectionable text to be downloaded into the memory from an external source.

In a preferred embodiment, the decoder conveys the separated closed captioning to the closed caption censor as a stream of text. The closed caption censor compares the received text with objectionable text in the memory and removes text from the stream corresponding to objectionable text in the memory. The closed caption censor uses a recursive binary search of the memory when comparing received text with the objectionable text.

Preferably, the censoring device further includes an audio censor responsive to the closed caption censor to censor an audio component of the video signal. The audio censor mutes the audio component of the video signal generally corresponding at least to removed portions of the separated closed captioning in response to the closed caption censor.

Also described is an audio censor responsive to said closed caption censor to censor an audio component of said video signal generally corresponding at least to censored portions of said separated closed caption component.

Also described is a closed caption censor which compares words in said closed captioning with offensive language stored in a dictionary and which removes words from said closed captioning that correspond with offensive words in said dictionary.

In still yet another aspect of the present invention there is provided a method of censoring a video signal including a closed caption signal component comprising the steps of:
separating the closed caption signal component from said video signal;
comparing text in said closed caption signal component with a list of objectionable text;
modifying said closed caption signal component to inhibit text therein corresponding to objectionable text in said list from being visibly discerned;
   and
recombining the closed caption signal component with the video signal.

In still yet another aspect of the present invention there is provided a censoring device to censor an audio signal component of a video signal comprising:
a closed caption censor receiving a closed caption signal component of said video signal and comparing words in said closed caption signal component with offensive language stored in a dictionary; and
an audio censor receiving the audio component of said video signal, said audio censor being responsive to said closed caption censor and muting at least the portion of the audio signal component generally corresponding to words in said closed caption signal component corresponding with offensive language in said dictionary.

The present invention provides advantages in that objectionable text in closed captioning forming part of a video signal is detected before the closed
captioning is presented on a television screen or the like. Steps are then taken in real time to inhibit the objectionable text from being seen on the television screen. This can be achieved by blanking out the offensive text, replacing the offensive text with substitute text or altering control characters associated with the offensive text to affect its appearance on the television screen. In this manner, only certain portions of video programs are censored regardless of the rating codes assigned to the video programs. Also, if desired, the audio component of the video signal, generally corresponding at least to offensive text in the closed captioning that have been removed, can be muted. If the television set is conditioned to inhibit closed captioning from being displayed or if the television set is unable to display closed captioning, the present censoring device can be used to inhibit the audio signal component of the video signal generally corresponding at least to offensive text embedded within the video signal. The present invention provides further advantages in that, since the closed caption censor is programmable, the list of offensive words and phrases can be customized by individual users.

### BRIEF DESCRIPTION OF THE DRAWINGS

Embodiments of the present invention will now be described more fully with reference to the accompanying drawings in which:
Figure 1 is a schematic diagram of a censoring device to censor closed captioning forming part of a video signal in accordance with the present invention;
Figure 2 is another schematic diagram of the censoring device of Figure 1 showing a closed caption censor of the censoring device connected to external programming devices;
Figure 3a is a schematic diagram of the closed caption sensor forming part of the censoring device of Figure 1;
Figure 3b is a diagram illustrating data processing within the closed caption censor of Figure 3a; and
Figure 4 is an alternative embodiment of a censoring device to censor closed captioning forming part of a video signal in accordance with the present invention.

### BEST MODE FOR CARRYING OUT THE INVENTION

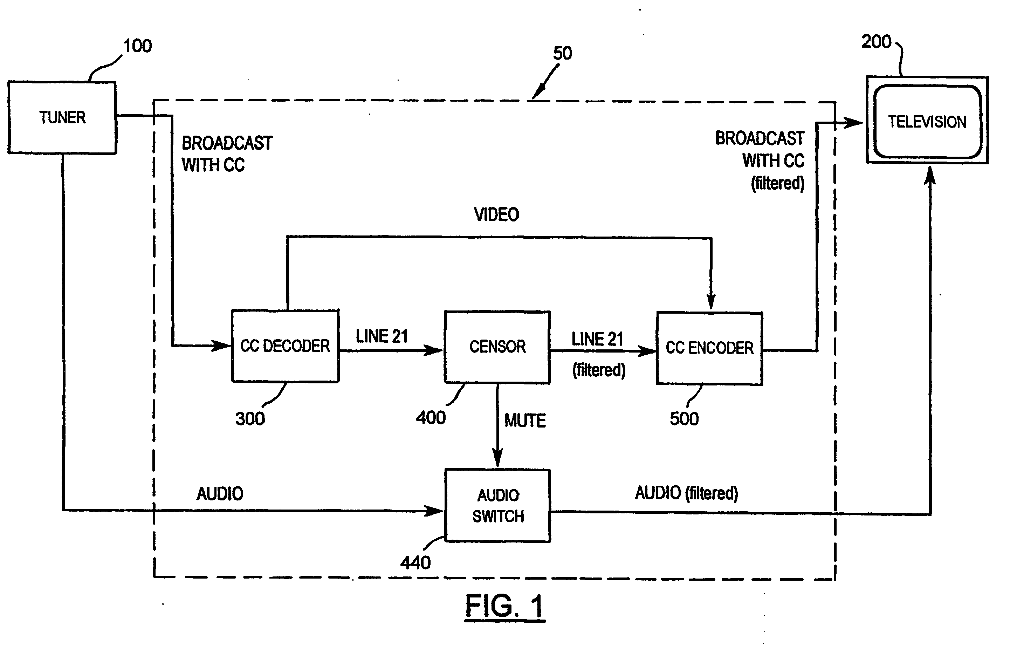

Turning now to Figure 1, a censoring device to censor closed captioning forming part of a video signal is shown and is generally identified by reference numeral 50. The censoring device 50 is to be connected between a source 100 of video signals embedded with closed captioning and a television set 200 or other video signal presentation device. The censoring device 50 receives video signals embedded with closed captioning from the source 100 and censors the closed captioning component of the video signals. The censored closed captioning is recombined with the video signals before the video signals are passed to the television set 200. In this manner, objectionable text in the closed captioning can be inhibited from appearing on the screen of the television set 200. If desired, the audio component of the video signals generally corresponding at least to the censored portions of the closed captioning can be muted. Specifics of the censoring device 50 will now be described with reference to Figures 1 to 3b.

As can be seen from these Figures, in this embodiment, the censoring device 50 includes a closed caption decoder 300 such as that sold under the name HUBCAP by Soft Touch Inc. of Maryland. Closed caption decoder 300 is connected to a source providing video signals with embedded closed captioning in the form of a tuner 100. The tuner 100 may be associated with cable television or a satellite dish descrambler. The tuner 100 typically receives broadcasted, weak radio frequency signals and amplifies a selected single signal. The closed caption decoder 300 provides closed captioning output to a closed caption censor 400 and video signal output to a closed caption encoder 500 such as that sold under the name CCEplus by Soft Touch Inc. of Maryland. Closed caption encoder 500 receives censored closed captioning output from the closed caption censor 400 and combines the censored closed captioning with the video signals received from the closed caption decoder 300. The combined censored closed captioning and video signals is output by the closed caption encoder 500 to the television set 200 for presentation.

The closed caption censor 400 also provides control output to an audio switch 440, which receives the audio signal component of the video signals from the tuner 100. The audio switch 440 is responsive to the closed caption censor 400 to censor portions of the audio signals generally corresponding to censored portions of the closed captioning. The output of the audio switch 440 is conveyed to the television set 200 so that audio corresponding to the censored closed captioning is broadcast by the television set 200.

Ideally, the closed caption decoder 300, closed caption censor 400, closed caption encoder 500 and audio switch 440 are mounted in a common housing (not shown) having appropriate connector ports to allow the censoring device 50 to be connected to the tuner 100 and television set 200 via suitable cabling.

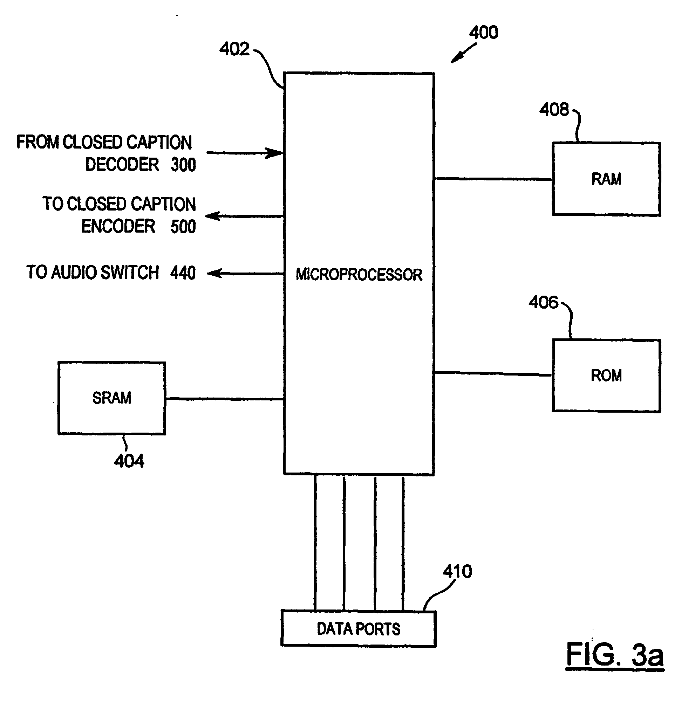

The closed caption censor 400 includes an on-board microprocessor-based unit including a microprocessor 402, required logic circuitry (not shown), static random access memory (SRAM) 404, read only memory (ROM) 406, random access memory (RAM) 408 and a plurality of external data ports 410 (see Figure 3a). The SRAM 404 stores a text file dictionary including an alphabetical list of offensive words and phrases. The offensive words and phrases correspond with words and phrases that are to be removed from closed captioning. In the preferred embodiment, the SRAM 404 is preprogrammed with a list of offensive words and phrases.

The microprocessor 402 executes software stored in the ROM 406 to initialize the closed caption decoder 300 and allow words in the closed captioning to be compared with words and phrases in the list in real time. In this particular example, the software includes three programs P1 to P3 which are simultaneously executed by the microprocessor 402. ROM 406 also stores a multitasking operating system such as Microsoft MS-DOS and the A.T. Barrett RTXC kernel to support simultaneous execution of the three programs P1 to P3. Spell-check software may also be executed by the microprocessor 402 to correct spelling errors in words of the closed captioning before the words are compared with the list.

The operation of the censoring device 50 will now be described. When the tuner 100 receives video signals of a specified channel to be viewed on the television set 200, the tuner conveys the audio signal component to the audio switch 440 and conveys the video signals including closed captioning to the closed caption decoder 300. As the closed caption decoder 300 receives the video signals, it separates the closed captioning from the video signal. As is well known, the closed captioning is transmitted on channel 1 of line 21 of standard NTSC video signal frames.

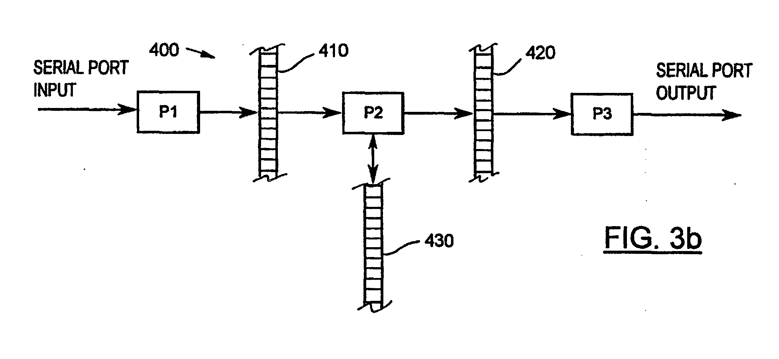

The closed captioning separated from the video signals by the closed caption decoder 300 is conveyed to an input serial port of the closed caption sensor 400 as a serial stream of ASCII text. As the stream of ASCII text is received by the closed caption censor 400, program P1, which runs as an infinite loop when executed by the microprocessor 402, reads in the text. The read text is then stored in a first-in-first-out (FIFO) data stack or queue 410 located within the RAM 408 (see Figure 3b). The program P1 also operates pointers and counters stored in the RAM 408, which indicate the location of the first character in the queue 410 and the length of the queue.

Program P2 executed by the microprocessor 402 reads each character from the queue 410 in the order it was placed in the queue and determines whether each character is a printable character or a non-printable character. Printable characters are typically displayed on the screen of the television set 200 while non-printable characters define where captions are to be displayed on the screen of the television set and how they are to be formatted. When the program P2 detects a non-printable character, it is transferred directly to a queue 420 in the RAM 408.

When program P2 detects a printable character, which includes numbers, letters and punctuation characters (including blank spaces), the printable character is transferred to a buffer 430. If the buffer 430 is empty and a punctuation character is detected by program P2, the punctuation character is conveyed to the queue 420. When numbers and letters are detected, the program P2 transfers the numbers and letters to the buffer 430. Program P2 assumes words are delimited by punctuation characters. Therefore, when a punctuation character is detected by program P2 and the buffer 430 is not empty, the characters in the buffer 430 are considered to form a complete word.

Once program P2 determines that a complete word is stored in the buffer 430, the program P2 compares, in real time, the word in the buffer with the words in the list. Since the list of offensive words and phrases in the dictionary is in alphabetical order, the program P2 uses a recursive binary search during the comparison. During this search, the program P2 divides the list in half and compares the word in the buffer 430 with the word in the middle of the list. If the two words are identical, the program P2 replaces the word in the buffer 430 with substitute text. In the present embodiment, a series of X's corresponding in number to the number of characters in the buffer word, followed by the punctuation character that followed the last character in the buffer word, are used to replace the offensive word in the buffer 430. The substitute text and following punctuation character are then written to the queue 420.

If the word in the buffer 430 is alphabetically lower than the middle word in the list, then the comparison process is repeated recursively using the first half of the list. Likewise, if the word in the buffer 430 is alphabetically higher than the middle word in the list, then the comparison process is repeated recursively using the second half of the list. This comparison process is repeated for the word in the buffer 430 until a match is found or the entire list has been checked. If the word in the buffer 430 is not found in the list, the program P2 writes the word and its following punctuation character to the queue 420.

Program P3 continuously monitors and adjusts the stack pointers and stack length variables of the queue 420 and transfers characters as they are placed in the queue to the output serial port of the closed caption censor 400. The characters output by the closed caption censor, form censored closed captioning

The censored closed captioning is received by the closed caption encoder 500, which also receives the video signal from the closed caption decoder 300. The closed caption encoder 500 combines the censored closed captioning and the video signals before conveying the video signals with the embedded censored closed captioning to the television set 200 for broadcasting. In this manner, the closed captioning displayed on the screen of the television set 200 is devoid of words found in the list of offensive words and phrases.

When a word in the buffer 430 that corresponds to a word in the list is detected, the microprocessor 402 also provides control output to the audio switch 440. The audio switch 440 in response to the control output moves to an open condition for a predetermined duration thereby to interrupt the audio feed to the television set 200. In the present embodiment, the predetermined duration is selected to equal about two seconds, a length of time found to be more than sufficient to ensure the audio signal component of the video signal generally corresponding to the offensive word in the closed captioning is muted. If desired, the predetermined duration can be increased or decreased. Increasing the predetermined duration reduces the likelihood that offensive language will be broadcast by the television set 200. However, the likelihood that inoffensive text is muted is increased. Decreasing the predetermined duration increases the likelihood that offensive language will be broadcast by the television set 200. However, the likelihood that inoffensive text is muted is decreased. Of course, the predetermined duration can be a function of the length of the offensive word.

In this embodiment, since the audio switch 440 is triggered after offensive text has been found in the closed captioning, to ensure proper timing, it is desired that the closed captioning embedded within the video signals slightly lead the corresponding audio signal component of the video signals. In this manner, sufficient time is provided for the closed captioning to be examined and censored and the audio switch triggered, before the corresponding audio signal component arrives at the audio switch 440. The audio signal component corresponding with offensive text in the closed captioning can therefore be inhibited from being broadcast by the television set 200.

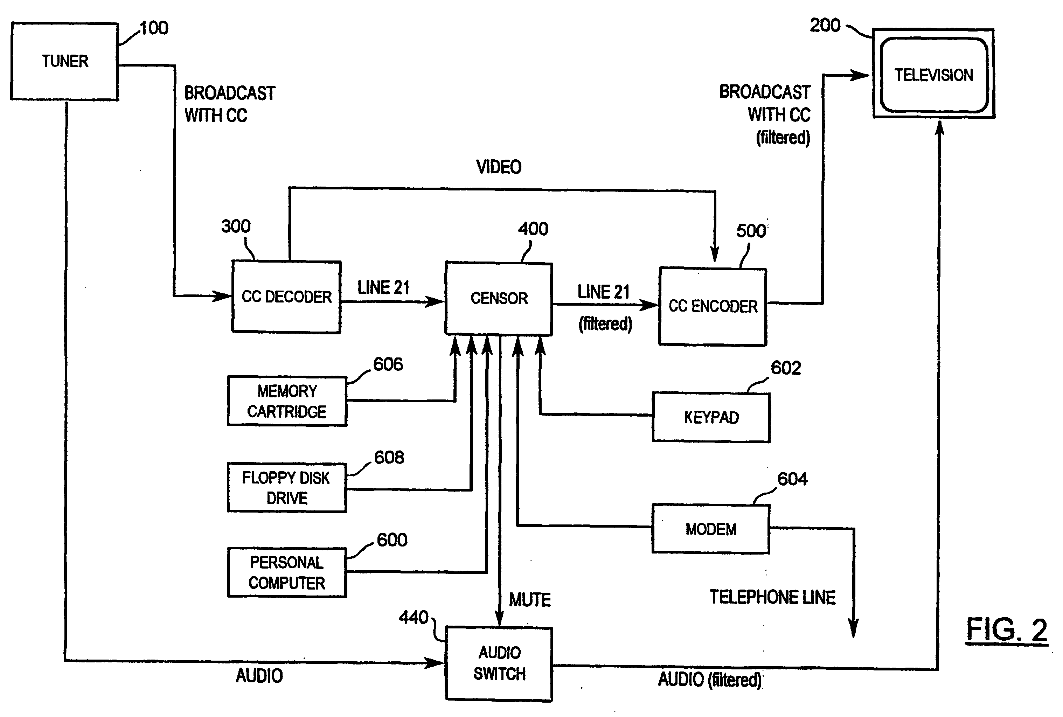

Preferably, the list of offensive words and phrases stored in the dictionary can be modified by a user in response to changing personal tastes or changes in television programming. In order to do so, a personal computer 600 or other data entry device 602 can be connected to the closed caption sensor 400 via one of the data ports 410 to allow the list of offensive words and phrases to be accessed and modified as desired (see Figure 2). This of course may be achieved through a direct connection to a data port 410 or alternatively through a modem 604 via a serial RS-232 or RS-422 connection.

In addition, if desired, the list of offensive words and phrases can be stored in external memory such as a memory cartridge 606 or a floppy disk drive 608 connected to one of the data ports 410. In this manner, when closed captioning text is being censored, the microprocessor 402 accesses the external memory and compares the text of the closed captioning with the words and phrases stored in the external memory to detect objectionable text in the closed captioning.

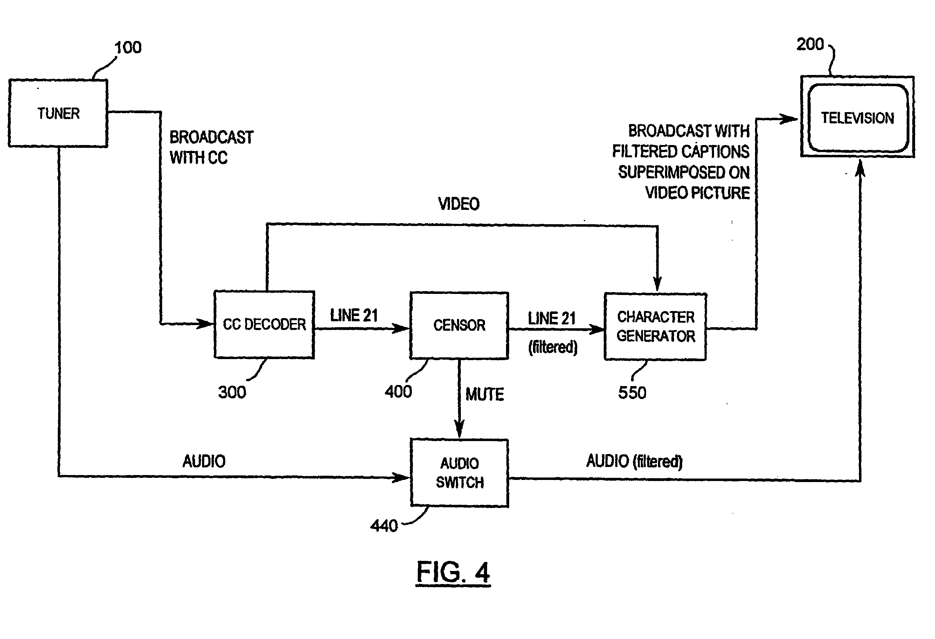

Turning now to Figure 4, an alternative embodiment of a censoring device in accordance with the present invention is shown. The censoring device in this embodiment, is basically the same as that of the first embodiment with the exception that the closed caption encoder 500 is replaced with a character generator 550. Character generators are more widely available than closed caption encoders. When a character generator 550 is used, some of the non-printable format control characters transmitted from the closed caption censor 400 are not utilized. As a result, the character generator 550 must be programmed so that the censored closed captioning is presented on the television screen at the desired location.

Although the closed caption censor 400 is described as replacing text in the closed captioning corresponding with offensive words and phrases in the dictionary list, with substitute text in the form of a series of X's, alternatives are available. For example, rather than replacing words in the closed captioning with a series of X's, the characters of offensive words can be replaced with blank spaces or other suitable characters. Alternatively, the offensive words can be replaced with substitute words considered to be acceptable replacements.

In addition, once it is determined that a word in the closed captioning corresponds with an offensive word or phrase in the list, rather than modifying the printable characters of that word, it is possible to modify the control characters associated with the offensive word in the closed captioning rather than modifying the closed captioning text. In this manner, when the offensive text in the closed captioning is conveyed to the television set 200, the modified associated control characters inhibit the offensive text in the closed captioning from being visibly discerned when the video signals are presented on the television set 200. This can be achieved, for example, by altering the color of the offensive text in the closed captioning so that it corresponds with the background of the closed captioning window, by altering the size of the closed captioning and/or possibly by positioning the closed captioning so that it is deflected to a position off the television screen.

In the first embodiment, although the closed captioning is described as being embedded within the video signals so that it slightly leads the corresponding audio signal component, alternatives are available. Generally, closed captioning is transmitted on channel 1 of line 21 of NTSC video signal frames. Channel 2 of line 21 can be used to provide advanced warning to the closed caption censor 400 that offensive text is going to appear on channel 1 of line 21. In this case, it is desired that only offensive words in the closed captioning appearing on channel 1 of line 21 are also included on channel 2 of line 21. The offensive text that is included on channel 2 of line 21 is positioned a predetermined number of video signal frames in advance of the counterpart offensive text on channel 1. In the preferred embodiment, the offensive text on channel 2 is placed ten frames ahead of its counterparts on channel 1.

During processing the closed caption decoder 300 conveys the closed captioning from both channels of line 21 to the closed caption censor 400. The microprocessor 402 monitors the closed captioning from both channels of line 21 and compares the closed captioning on both channels with the offensive words and phrases in the list as described previously. When the microprocessor 402 detects an offensive word in the closed captioning on channel 2, the microprocessor 402 replaces the offensive text with replacement text. The microprocessor 402 also provides the control signal to the audio switch 440 ten frames later so that the audio signal component corresponding to the offensive text carried on channel 1 is muted at the appropriate time. Since the length of the offensive word in the full closed captioning and the arrival time of its audio counterpart at the audio switch 440 are known in advance, the length of time the audio switch 440 is actuated to mute the audio signal component of the video signal can be more accurately controlled reducing the likelihood of inoffensive text being muted.

If the television set 200 is conditioned to inhibit closed captioning from being displayed or if the television set is unable to display closed captioning, the censoring device 50 is still useful as an audio censor. Since the closed captioning is embedded in the video signal, even if the television set is unable to display the closed captioning, the closed captioning in the video signals can be used to trigger the audio switch 440 to mute the audio signal component corresponding to offensive text in the closed captioning.

Although the censoring device 50 is shown receiving video signals embedded with closed captioning from a tuner, those of skill in the art will appreciate that the video signals can be received from virtually any source whether broadcasted or read from a recorded medium such as a video-cassette tape or the like. Also, although the censoring device is described as including a single housing, the components of the censoring device may be individually housed. The censoring device may be used in individual households to censor video signals or may be used to censor video signals prior to transmission to households.

## Claims

1. A censoring device (50) to censor closed captioning forming part of a video signal comprising:
a decoder (300) receiving an incoming video signal including closed captioning and separating said closed captioning from said video signal;
and **characterised by**
a closed caption censor (400) receiving the separated closed captioning from said decoder and censoring the same to form censored closed captioning; and
a generator (500) receiving said video signal and censored closed captioning and combining said censored closed captioning and said video signal to form a censored video signal.

2. A censoring device according to claim 1 wherein said closed caption censor (400) inhibits portions of the separated closed captioning considered objectionable from being visibly discerned.

3. A censoring device according to claim 2 wherein said closed caption censor (400) inhibits said portions by deleting text of said separated closed captioning.

4. A censoring device according to claim 2 wherein said closed caption censor (400) inhibits said portions by replacing text of said separated closed captioning with substitute text.

5. A censoring device according to claim 2 wherein said decoder (300) conveys said separated closed captioning to said closed caption censor (400) as a stream of text, said closed caption censor comparing received text with objectionable text stored in memory therein and inhibiting text from said stream corresponding to objectionable text in said memory from being visibly discerned.

6. A censoring device according to claim 5 wherein said memory is programmable to allow said objectionable text to be altered.

7. A censoring device according to claim 5 or 6 wherein said memory is preloaded with objectionable text.

8. A censoring device according to claim 5 further comprising an audio censor (440) responsive to said closed caption censor (400) to censor an audio component of said video signal.

9. A censoring device according to claim 8 wherein said audio censor (440) mutes the audio component of said video signal generally corresponding at least to inhibited portions of the separated closed captioning in response to said closed caption censor (400).

10. A censoring device according to claim 1 further comprising:
an audio censor (440) responsive to said closed caption censor (400) to censor an audio component of said video signal generally corresponding at least to portions of said separated closed captioning censored by said closed caption censor (400).

11. A censoring device according to claim 10 wherein said audio censor (440) mutes the audio component of said video signal in response to said closed caption censor.

12. A censoring device according to claim 11 wherein said closed captioning in said incoming video signals leads the corresponding audio component, said closed caption censor (400) actuating said audio censor (440) upon censoring of said closed caption component.

13. A censoring device according to any one of the preceding claims wherein;
said closed caption censor (400) compares words in said closed captioning with offensive language stored in a dictionary and removes words from said closed captioning that correspond with words in said dictionary.

14. A censoring device according to claim 13 wherein said closed caption censor (400) replaces removed words with replacement text.

15. A censoring device according to any one of the preceding claims wherein said generator is a closed caption encoder (500).

16. A censoring device according to claim 11 wherein said incoming video signal is embedded with data that leads objectionable text in said closed captioning, said data being used to time actuation of said auto censor (440) and thereby mute the audio component of said incoming video signal corresponding to said objectionable text.

17. A method of censoring a video signal including a closed caption signal component comprising the steps of:
separating the closed caption signal component from said video signal;
and **characterised by**
comparing text in said closed caption signal component with a list of objectionable text;
modifying said closed caption signal component to inhibit text therein corresponding to objectionable text in said list from being visibly discerned;
and
recombining the closed caption signal component with the video signal.

18. The method of claim 17 further comprising the step of muting portions of an audio signal component of said video signal corresponding generally to modified portions of said closed caption signal component.

19. The method of claim 18 wherein during said modifying step text in said closed caption signal component is deleted or replaced.

20. A censoring device (50) to censor an audio signal component of a video signal comprising:
a closed caption censor (400) receiving a closed caption signal component of said video signal and **characterised by** comparing words in said closed caption signal component with offensive language stored in a dictionary; and
an audio censor (440) receiving the audio component of said video signal, said audio censor being responsive to said closed caption censor (400) and muting at least the portion of the audio signal component generally corresponding to words in said closed caption signal component corresponding with offensive language in said dictionary.

## Patentansprüche

1. Zensurvorrichtung (50) zum Zensieren von Untertiteln (closed captioning), die Teil eines Videosignals sind, umfassend:
einen Dekodierer (300), der ein ankommendes Videosignal einschließlich Untertitelung empfängt und die Untertitelung von dem Videosignal abtrennt;
**gekennzeichnet durch**
eine Untertitelzensureinheit (400), die die von dem Dekodierer abgetrennte Untertitelung empfängt und diese zensiert, um eine zensierte Untertitelung zu bilden; und
einen Generator (500), der das Videosignal und die zensierte Untertitelung empfängt und die zensierte Untertitelung und das Videosignal kombiniert, um ein zensiertes Videosignal zu bilden.

2. Zensurvorrichtung nach Anspruch 1,
**dadurch gekennzeichnet, daß**
die Untertitelzensureinheit (400) verhindert, daß Teile der als anstößig betrachteten Untertitelung sichtbar wahmehmbar sind.

3. Zensurvorrichtung nach Anspruch 2,
**dadurch gekennzeichnet, daß**
die Untertitelzensureinheit (400) die genannten Teile blockiert durch Löschen von Text aus der abgetrennten Untertitelung.

4. Zensurvorrichtung nach Anspruch 2,
**dadurch gekennzeichnet, daß**
die Untertitelzensureinheit (400) die genannten Teile blockiert durch Ersetzen von Text aus der abgetrennten Untertitelung mit einem Ersatztext.

5. Zensurvorrichtung nach Anspruch 2,
**dadurch gekennzeichnet, daß**
der Dekodierer (300) die abgetrennte Untertitelung zu der Untertitelzensureinheit (400) in Form eines Textstromes leitet, die Untertitelzensureinheit den empfangenen Text mit dem in einem Speicher gespeicherten anstößigen Text vergleicht und verhindert, daß der Text von dem Strom, der dem anstößigen Text in dem Speicher entspricht, sichtbar wahrnehmbar ist.

6. Zensurvorrichtung nach Anspruch 5,
**dadurch gekennzeichnet, daß**
der Speicher programmierbar ist, um den anstößigen Text ändern zu können.

7. Zensurvorrichtung nach einem der Anspruch 5 oder 6,
**dadurch gekennzeichnet, daß**
der Speicher mit einem anstößigen Text vorgespeichert ist.

8. Zensurvorrichtung nach Anspruch 5, welche weiterhin eine auf die Untertitelzensureinheit (400) reagierende Audiozensureinheit (440) umfaßt, um eine Audiokomponente des Videosignals zu zensieren.

9. Zensurvorrichtung nach Anspruch 8,
**dadurch gekennzeichnet, daß**
die Audiozensureinheit (440) die Audiokomponente des Videosignals im wesentlichen entsprechend mindestens der blockierten Teile der abgetrennten Untertitelung in Reaktion auf die Untertitelzensureinheit (400) stumm schaltet.

10. Zensureinheit nach Anspruch 1, weiterhin umfassend:
eine Audiozensureinheit (440), die auf die Untertitelzensureinheit (400) reagiert, um eine Audiokomponente des Videosignals, das im wesentlichen mindestens Teilen der abgetrennten und durch die Untertitelzensureinheit (400) zensierten Untertitelung entspricht, zu zensieren.

11. Zensurvorrichtung nach Anspruch 10,
**dadurch gekennzeichnet, daß**
die Audiozensureinheit (440) die Audiokomponente des Videosignals in Reaktion auf die Untertitelzensureinheit stumm schaltet.

12. Zensurvorrichtung nach Anspruch 1,
**dadurch gekennzeichnet, daß**
die Untertitelung in den ankommenden Videosignalen die korrespondierende Audiokomponente führt, wobei die Untertitelzensureinheit (400) die Audiozensureinheit (440) auf die Zensur der Untertitelzensurkomponente betätigt.

13. Zensurvorrichtung nach einem der vorhergehenden Ansprüche,
**dadurch gekennzeichnet, daß**
die Untertitelzensureinheit (400) Wörter in der Untertitelung mit anstößigen, in einem Wörterbuch gespeicherten Begriffen vergleicht und die Wörter, die Wörtern in dem Wörterbuch entsprechen, von der Untertitelung entfernt.

14. Zensurvorrichtung nach Anspruch 13,
**dadurch gekennzeichnet, daß**
die Untertitelzensureinheit (400) die gelöschten Wörter mit einem Ersatztext ersetzt.

15. Zensurvorrichtung nach einem der vorhergehenden Ansprüche,
**dadurch gekennzeichnet, daß**
der Generator ein Untertitelenkodierer (500) ist.

16. Zensurvorrichtung nach Anspruch 11,
**dadurch gekennzeichnet, daß**
das ankommende Videosignal eingebettet ist in Daten, die anstößigen Text in der Untertitelung führen, wobei die Daten benötigt werden, um die Ingangsetzung der Audiozensureinheit (440) festzulegen und dadurch die Audiokomponente des ankommenden Videosignals, die dem anstößigen Text entspricht, stumm schaltet.

17. Verfahren zum Zensieren eines Videosignals, das eine Untertitelsignalkomponente aufweist, umfassend die folgenden Schritte:
Abtrennen der Untertitesignalkomponente von dem Videosignal; und
**gekennzeichnet durch**
Vergleichen des Textes in der Untertitelsignalkoraponente mit einer Liste von anstößigem Text;
Modifizieren der Untertitelsignalkomponente, um zu verhindern, daß darin befindlicher Text, der dem anstößigen Text der Liste entspricht, sichtbar wahrnehmbar ist; und
Wiederzusammenfügen der Untertitelsignalkomponente mit dem Videosignal.

18. Verfahren nach Anspruch 17, das weiterhin
**gekennzeichnet ist durch**
den Schritt, Teils einer Audiosignalkomponente des Videosignals, die im wesentlichen modifizierten Teilen der Untertitelsignalkomponente entsprechen, stumm zu schalten.

19. Verfahren nach Anspruch 18, bei welchem während des Modifizierungsschrittes Text in der Untertitelsignalkomponente gelöscht oder ersetzt wird.

20. Zensurvorrichtung (50) zum Zensieren einer Audiosignalkomponente eines Videosignals umfassend:
eine Untertitelzensureinheit (400), die eine Untertitelsignalkomponente des Videosignals empfängt und **gekennzeichnet ist durch** ein Vergleichen von Wörtern in der Untertitelsignalkomponente mit anstößigen Begriffen, die in einem Wörterbuch gespeichert sind;
eine Audiozensureinheit (440), die die Audiokomponente des Videosignals empfängt, wobei die Audiozensureinheit auf die Untertitelzensureinheit (400) reagiert und wenigstens den Teil der Audiosignalkomponente, der im wesentlichen Wörtern in der Untertitelsignalkomponente, die wiederum anstößigen Begriffen in dem Wörterbuch entsprechen, stumm zu schalten.

## Revendications

1. Un dispositif de censure (50) pour censurer des sous-titres codés faisant partie d'un signal vidéo comprenant:
- un décodeur (300) qui reçoit un signal vidéo d'entrée comportant des sous-titres codés et pour séparer lesdits sous-titres codés dudit signal vidéo,
et **caractérisé par**:
- un organe de censure des sous-titres codés (400) qui reçoit les sous-titres codés ainsi séparés à partir dudit décodeur pour les censurer et pour former des sous-titres codés censurés; et
- un générateur (500) qui reçoit ledit signal vidéo ainsi que les sous-titres codés censurés pour combiner lesdits sous-titres codés censurés et ledit signal vidéo pour former un signal vidéo censuré.

2. Un dispositif de censure selon la revendication 1, dans lequel ledit organe de censure des sous-titres codés (400) inhibe la perception visuelle des parties des sous-titres codés séparés considérés comme étant inadmissibles.

3. Un dispositif de censure selon la revendication 2, dans lequel ledit organe de censure des sous-titres codés (400) inhibe lesdites parties par suppression de texte desdits sous-titres codés séparés.

4. Un dispositif de censure selon la revendication 2, dans lequel ledit organe de censure des sous-titres codés (400) inhibe lesdites parties par le remplacement du texte desdits sous-titres codés séparés avec un texte de remplacement.

5. Un dispositif de censure selon la revendication 2, dans lequel ledit décodeur (300) transporte lesdits sous-titres séparés vers ledit organe de censure des sous-titres codés (400) sous forme d'un flux de texte, ledit organe de censure des sous-titres codés comparant le texte reçu avec du texte considéré comme inadmissible stocké dans une mémoire avec inhibition de la perception visuelle du texte dans ledit flux qui correspond au texte considéré comme inadmissible dans ladite mémoire.

6. Un dispositif de censure selon la revendication 5, dans lequel ladite mémoire est programmable pour permettre le changement du texte considéré comme étant inadmissible.

7. Un dispositif de censure selon la revendication 5 ou 6, dans lequel ladite mémoire est préchargée avec du texte considéré comme inadmissible.

8. Un dispositif de censure selon la revendication 5 comprenant en outre un organe de censure audio (440) sensible audit organe de censure des sous-titres codés (400) pour censurer une composante audio dudit signal vidéo.

9. Un dispositif de censure selon la revendication 8, dans lequel ledit organe de censure audio (440) met en sourdine la composante audio dudit signal vidéo correspondant en général au moins à des parties inhibées des sous-titres codés séparés, en réponse audit organe de censure des sous-titres codés (400).

10. Un dispositif de censure selon la revendication 1 comprenant en outre:
- un organe de censure audio (440) sensible audit organe de censure des sous-titres codés (400) pour censurer une composante audio dudit signal vidéo correspondant en général au moins à des parties desdits sous-titres codés séparés qui ont été censurés par ledit organe de censure des sous-titres codés (400).

11. Un dispositif de censure selon la revendication 10, dans lequel ledit organe de censure audio (440) met en sourdine la composante audio dudit signal vidéo en réponse audit organe de censure des sous-titres codés.

12. Un dispositif de censure selon la revendication 11, dans lequel lesdits sous-titres codés dans lesdits signaux vidéo entrants sont en avance par rapport à la composante audio correspondante, ledit organe de censure des sous-titres codés (400) activant ledit organe de censure audio (440) suite à la censure de ladite composante comprenant les sous-titres codés.

13. Un dispositif de censure selon l'une quelconque des revendications précédentes, dans lequel;
- ledit organe de censure des sous-titres codés (400) comparent des mots dans lesdits sous-titres codés avec du langage injurieux stocké dans un dictionnaire en supprimant des mots desdits sous-titres codés qui correspondent aux mots dans ledit dictionnaire.

14. Un dispositif de censure selon la revendication 13, dans lequel ledit organe de censure de sous-titre codé (400) remplace des mots enlevés avec du texte de remplacement.

15. Un dispositif de censure selon l'une quelconque des revendications précédentes, dans lequel ledit générateur est un codeur de sous-titre codé (500).

16. Un dispositif de censure selon la revendication 11, dans lequel est incorporé dans ledit signal vidéo d'entrée des données en avance sur le texte considéré comme inadmissible dans lesdits sous-titres codés, lesdites données étant utilisées pour synchroniser l'activation dudit organe de censure audio (440) mettant ainsi en sourdine la composante audio dudit signal vidéo entrant en correspondance audit texte considéré comme inadmissible.

17. Un procédé de censure d'un signal vidéo qui comprend une composante de signal de sous-titre codé, comprenant les étapes consistant: - à séparer la composante de signal de sous-titre codé dudit signal vidéo,
et **caractérisé par**:
- la comparaison du texte dans ladite composante de signal de sous-titre codé avec une liste de texte considérée comme inadmissible ;
- la modification de ladite composante de signal de sous-titres codés pour inhiber la perception visuelle du texte qui correspond au texte considéré comme inadmissible dans ladite liste ;
et
- la recombinaison de la composante de signal de sous-titre codé avec ledit signal vidéo.

18. Le precédé de la revendication 17, comprenant en outre l'étape consistant à mettre en sourdine les parties d'une composante de signal audio dudit signal vidéo qui correspondent en général à des parties modifiées de ladite partie de signal de sous-titres codés.

19. Le procédé selon la revendication 18, dans lequel, lors de ladite étape de modification, on supprime ou on remplace du texte dans ladite composante de signal de sous-titres codés.

20. Un dispositif de censure (50) pour censurer une composante de signal audio de signal vidéo, comprenant:
- un organe de censure de sous-titres codés (400) qui reçoit une composante de signal de sous-titres codés dudit signal vidéo et **caractérisé par** la comparaison des mots dans ladite composante de signal de sous-titres codés avec du langage injurieux stocké dans un dictionnaire; et
- un organe de censure audio (440) qui reçoit la composante audio dudit signa] vidéo, ledit organe de censure audio étant sensible audit organe de censure de sous-titres codés (400) et mettant en sourdine au moins la partie de la composante de signal audio qui correspond en général à des mots dans ladite composante de signal de sous-titres codés qui correspondent à un langage injurieux dans ledit dictionnaire.
